# EUROPEAN PATENT APPLICATION

(11) **EP 2 355 495 A2**
(43) Date of publication of application: **10.08.2011**
(21) Application number: 11000950.3
(22) Date of filing: 07.02.2011
(51) Int. Cl.: H04N 5/445

(54) **An electronic device and a method for providing a graphical user interface (gui) for broadcast information**

(30) Priority: 05.02.2010 KR 20100011236
(71) Applicant: LG ELECTRONICS INC., Yeongdeungpo-gu Seoul 150-721 (KR)
(72) Inventor: Kim, Sung, Soo, Pyeongtaek-si Gyeonggi-do 451-731 (KR); Lee, Jae, Kyung, Pyeongtaek-si Gyeonggi-do 451-731 (KR); Choi, Na, Young, Pyeongtaek-si Gyeonggi-do 451-731 (KR); Lim, Joo, Young, Pyeongtaek-si Gyeonggi-do 451-731 (KR); Kim, Dong, Jin, Pyeongtaek-si Gyeonggi-do 451-731 (KR)
(74) Representative: Gunzelmann, Rainer

(57) **Abstract**

An electronic device and a method for providing a Graphical User Interface (GUI) are disclosed. The electronic device includes a formatter configured to output a first signal for displaying an image data of a first broadcast content to a display, a controller configured to detect a first request for providing broadcast information, form a first set of pixel data for displaying a GUI providing the broadcast information in response to detecting the first request, and form a second set of pixel data and a third set of pixel data using the first set of pixel data, and a mixer configured to mix the image data with the second set of pixel data and the third set of pixel data.

## Description

This application claims the benefit of the Korean Patent Application No. 10-2010-0011236, filed on February 5, 2010, which is hereby incorporated by reference as if fully set forth herein.

### BACKGROUND OF THE INVENTION

### Field of the Invention

The present invention relates to an electronic device and a method for providing a graphical user interface (GUI), and more particularly, to an electronic device for providing a GUI for displaying broadcast information and a method for providing the GUI.

### Discussion of the Related Art

The current trend of a broadcasting environment is rapidly changing from analog broadcasting to digital broadcasting. With this trend, contents for digital broadcasting have been more increased than those for existing analog broadcasting, and their types have been diversified. In particular, attention to 3-dimensitional (3D) contents, which provide reality as compared with 2-dimensional (2D) contents, has been increased recently, and thus many 3D contents have been manufactured. In this respect, many studies have been made to allow users to view such 3D contents through a digital broadcast receiver at home.

However, a digital broadcast receiver according to the related art is configured in such a manner that when a user requests additional information while viewing a broadcast program or channel, an existing OSD is deleted to display additional information or additional OSD is displayed on the existing OSD. In this case, a problem occurs in that a video previously viewed by the user is covered by the additional OSD to cause inconvenience in viewing the video.

For example, in the digital broadcast receiver according to the related art, if a user requests a channel edit, a channel edit user interface (UI) is displayed on the entire screen, whereby the user cannot view the current video. If the user requests brief information, a brief information UI is displayed. In this case, in case of many kinds of brief information, the current video is covered by many kinds of brief information. Also, in the digital broadcast receiver according to the related art, a problem occurs in that the user should perform several steps to view a recording list. Also, a problem occurs in that the user cannot view the current video well if an EPG is displayed.

### SUMMARY OF THE INVENTION

Accordingly, the present invention is directed to an electronic device and a method for providing Graphical User Interface (GUI) for broadcast information that substantially obviate one or more problems due to limitations and disadvantages of the related art.

An object of the present invention is to provide a method for providing a GUI for broadcast information based on a request of a user, in which an overlap zone between the GUI and a video screen previously viewed by the user is minimized to allow a viewer to operate or navigate the GUI while viewing broadcasting.

Another object of the present invention is to provide an electronic device and a method for providing a GUI as above.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing a Graphical User Interface (GUI) comprises outputting a first signal for displaying an image data of a first broadcast content to a display, detecting a first request for providing broadcast information, forming a first set of pixel data for displaying a Graphical User interface (GUI) providing the broadcast information in response to detecting the first request, forming a second set of pixel data and a third set of pixel data using the first set of pixel data, wherein one of the second set of pixel data and the third set of pixel data is linearly scaled and the other is nonlinearly scaled, mixing the image data with the second set of pixel data and the third set of pixel data, and, outputting a second signal for displaying the mixed image data to the display.

The method further comprises detecting a second request for displaying a second broadcast content on the GUI, receiving the second broadcast content in response to detecting the second request, forming a fourth set of pixel data and a fifth set of pixel data using an image data of the received second broadcast content, wherein one of the fourth set of pixel data and the fifth set of pixel data is linearly scaled and the other is nonlinearly scaled, mixing the mixed image data with the fourth set of pixel data and the fifth set of pixel data, and, outputting a third signal for displaying the mixed image data to the display. Herein, the image data of the first broadcast content is one of 2 dimensional image and 3 dimensional image.

The method further comprises detecting a third request for providing information about the second broadcast content, forming a sixth set of pixel data for displaying a GUI providing the information in response to detecting the third request, forming a seventh set of pixel data and a eight set of pixel data using the sixth set of pixel data, wherein one of the seventh set of pixel data and the eight set of pixel data is linearly scaled and the other is nonlinearly scaled, mixing the mixed image data with the seventh set of pixel data and the eighth set of pixel data, and outputting a forth signal for displaying the mixed image data to the display.

The method further comprises detecting a third request for changing from the first broadcast content to the second broadcast content, mixing the image data of the second broadcast content with the first set of pixel data and the second set of pixel data in response to detecting the third request, and, outputting a forth signal for displaying the mixed image data to the display.

The method further comprises detecting a second request for changing from the first broadcast content to a second broadcast content on the GUI, receiving the second broadcast content in response to detecting the second request, mixing an image data of the received second broadcast content with the first set of pixel data and the second set of pixel data, and outputting a third signal for displaying the mixed image data to the display.

The method further comprises detecting a second request for changing from the first broadcast content to a second broadcast content on the GUI, identifying whether the second broadcast content is locked in response to detecting the second request, forming a fourth set of pixel data for displaying a GUI for authentication information when the second broadcast content is locked, forming a fifth set of pixel data and a sixth set of pixel data using the fourth set of pixel data, wherein one of the fifth set of pixel data and the sixth set of pixel data is linearly scaled and the other is nonlinearly scaled, and outputting a third signal for displaying the fifth set of pixel data and the sixth set of pixel data to the display.

The mixing the image data comprises mixing a left-view image data of the image data with the second set of pixel data and a right-view image data of the image data with the third set of pixel data.

In another aspect of the present invention, an electronic device comprises a formatter configured to output a first signal for displaying an image data of a first broadcast content to a display, a controller configured to detect a first request for providing broadcast information, form a first set of pixel data for displaying a Graphical User interface (GUI) providing the broadcast information in response to detecting the first request, and form a second set of pixel data and a third set of pixel data using the first set of pixel data, wherein one of the second set of pixel data and the third set of pixel data is linearly scaled and the other is nonlinearly scaled, and a mixer configured to mix the image data with the second set of pixel data and the third set of pixel data, wherein the formatter outputs a second signal for displaying the mixed image data to the display.

The controller detects a second request for displaying a second broadcast content on the GUI, receives the second broadcast content in response to detecting the second request, and forms a fourth set of pixel data and a fifth set of pixel data using an image data of the received second broadcast content, wherein one of the fourth set of pixel data and the fifth set of pixel data is linearly scaled and the other is nonlinearly scaled, the mixer mixes the mixed image data with the fourth set of pixel data and the fifth set of pixel data, and the formatter outputs a third signal for displaying the mixed image data to the display.

The controller detects a third request for providing information about the second broadcast content, forms a sixth set of pixel data for displaying a GUI providing the information in response to detecting the third request, and forms a seventh set of pixel data and a eight set of pixel data using the sixth set of pixel data, wherein one of the seventh set of pixel data and the eight set of pixel data is linearly scaled and the other is nonlinearly scaled, the mixer mixes the mixed image data with the seventh set of pixel data and the eighth set of pixel data, and the formatter outputs a forth signal for displaying the mixed image data to the display.

The controller detects a third request for changing from the first broadcast content to the second broadcast content, the mixer mixed the image data of the second broadcast content with the first set of pixel data and the second set of pixel data in response to detecting the third request, and the formatter outputs a forth signal for displaying the mixed image data to the display.

The controller detects a second request for changing from the first broadcast content to a second broadcast content on the GUI, and controls to receive the second broadcast content in response to detecting the second request, the mixer mixes an image data of the received second broadcast content with the first set of pixel data and the second set of pixel data, and the formatter outputs a third signal for displaying the mixed image data to the display.

The controller detects a second request for changing from the first broadcast content to a second broadcast content on the GUI, identifies whether the second broadcast content is locked in response to detecting the second request, forms a fourth set of pixel data for displaying a GUI for authentication information when the second broadcast content is locked, and forms a fifth set of pixel data and a sixth set of pixel data using the fourth set of pixel data, wherein one of the fifth set of pixel data and the sixth set of pixel data is linearly scaled and the other is nonlinearly scaled, and the formatter outputs a third signal for displaying the fifth set of pixel data and the sixth set of pixel data to the display.

The mixer mixes a left-view image data of the image data with the second set of pixel data and a right-view image data of the image data with the third set of pixel data.

In another aspect of the present invention, a method for providing a Graphical User Interface (GUI) comprises outputting a first signal for displaying an image data of a first broadcast content to a display, detecting a first request for providing broadcast information, forming a first set of pixel data for displaying a Graphical User interface (GUI) providing the broadcast information in response to detecting the first request, forming a second set of pixel data and a third set of pixel data using the image data, wherein one of the second set of pixel data and the third set of pixel data is linearly scaled and the other is nonlinearly scaled, mixing the first set of pixel data with the second set of pixel data and the third set of pixel data, and outputting a second signal for displaying the mixed first set of pixel data to the display.

The method further comprises detecting a second request for displaying the image data in full display, and outputting a third signal for displaying the image data in response with the image data. Herein, the second request is a signal selecting an area displaying the image data.

The method further comprises detecting a second request for changing from the first broadcast content to a second broadcast content on the GUI, receiving the second broadcast content in response to detecting the second request, forming a fourth set of pixel data and a fifth set of pixel data using an image data of the received second broadcast content, wherein one of the fourth set of pixel data and the fifth set of pixel data is linearly scaled and the other is nonlinearly scaled, mixing the formed first set of pixel data with the fourth set of pixel data and the fifth set of pixel data, and outputting a third signal for displaying the mixed first set of pixel data to the display.

The method further comprises detecting a second request for providing information about the first broadcast content on the GUI, forming a fourth set of pixel data for displaying a GUI providing the information in response to detecting the second request, mixing the fourth set of pixel data with the second set of pixel data and the third set of pixel data and outputting a forth signal for displaying the mixed fourth set of pixel data to the display.

According to the present invention, the user can control broadcast information while viewing broadcasting.

In addition, the GUI for broadcast information based on a request of the user is configured in three-dimension to increase recognition of the corresponding GUI and seek convenience in use.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating an electronic device configured in accordance with the present invention;

FIG. 2 and FIG. 3 are flowcharts illustrating basic concept of a method for providing a GUI in accordance with the present invention;

FIG. 4 is a diagram illustrating perspective based on an interval or time difference (hereinafter, referred to as "interval") between left image data and right image data;

FIG. 5A and FIG. 5B are a diagram illustrating an example of a method for implementing a 3D GUI in accordance with the present invention;

FIG. 6A and FIG. 6B are a diagram illustrating a first embodiment of a method for providing a GUI in accordance with the present invention;

FIG. 7 is a diagram illustrating a second embodiment of a method for providing a GUI in accordance with the present invention;

FIG. 8 is a diagram illustrating a third embodiment of a method for providing a GUI in accordance with the present invention;

FIG. 9 is a diagram illustrating a fourth embodiment of a method for providing a GUI in accordance with the present invention;

FIG. 10 is a diagram illustrating a fifth embodiment of a method for providing a GUI in accordance with the present invention;

FIG. 11A to 11C are a diagram illustrating a sixth embodiment of a method for providing a GUI in accordance with the present invention;

FIG. 12A to 12D are a diagram illustrating a seventh embodiment of a method for providing a GUI in accordance with the present invention;

FIG. 13A to 13C are a diagram illustrating an eighth embodiment of a method for providing a GUI in accordance with the present invention;

FIG. 14A to 14C are a diagram illustrating a ninth embodiment of a method for providing a GUI in accordance with the present invention;

FIG. 15 to FIG. 18 are diagrams illustrating tenth to thirteenth embodiments of a method for providing a GUI in accordance with the present invention;

FIG. 19A to 19C are a diagram illustrating a fourteenth embodiment of a method for providing a GUI in accordance with the present invention;

FIG. 20 is a diagram illustrating a first embodiment of a method for scaling image data; and

FIG. 21 is a diagram illustrating a second embodiment of a method for scaling image data.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

The present invention relates to an electronic device and a method for providing a graphical user interface (GUI). Hereinafter, the electronic device and the method for providing a GUI will be described with reference to the accompanying drawings.

The electronic device according to the present invention configures a GUI that includes broadcast information in accordance with a request of a user, and provides the information based on the request of the user by outputting the configured GUI to a predetermined zone of a screen.

In a digital broadcast receiver according to the related art, a GUI for broadcast information is provided in such a manner that an OSD is displayed on a screen where video being viewed by the user is being output. In this case, a problem occurs in that the user cannot view the video well due to the broadcast information.

In order to solve such a problem, the present invention is intended to an electronic device and a method for providing a GUI, in which an overlap zone between a video previously viewed by a user and a GUI is minimized to allow the user to control broadcast information while viewing the video.

Hereinafter, for understanding of technical spirits of the present invention and convenience of description, the electronic device can provide a GUI having 3-dimension (3D) video or image, or 3D type. In this case, corresponding information in respect of the GUI can be stored in the electronic device. Alternatively, the corresponding information may be provided on a screen of the electronic device through access of either an external server connected through a network or manufacturer's home page of each product.

Also, in this specification, although various types of the GUI are provided through the electronic device in accordance with the request of the user, for convenience of description, a use scenario of a specific GUI will be described exemplarily. Hereinafter, electronic program guide (EPG), channel edit GUI, and brief information GUI will be described as examples of the GUI. However, it will be apparent that other GUIs provided through the electronic device can be applied to the GUI according to the present invention.

[ELECTRONIC DEVICE]

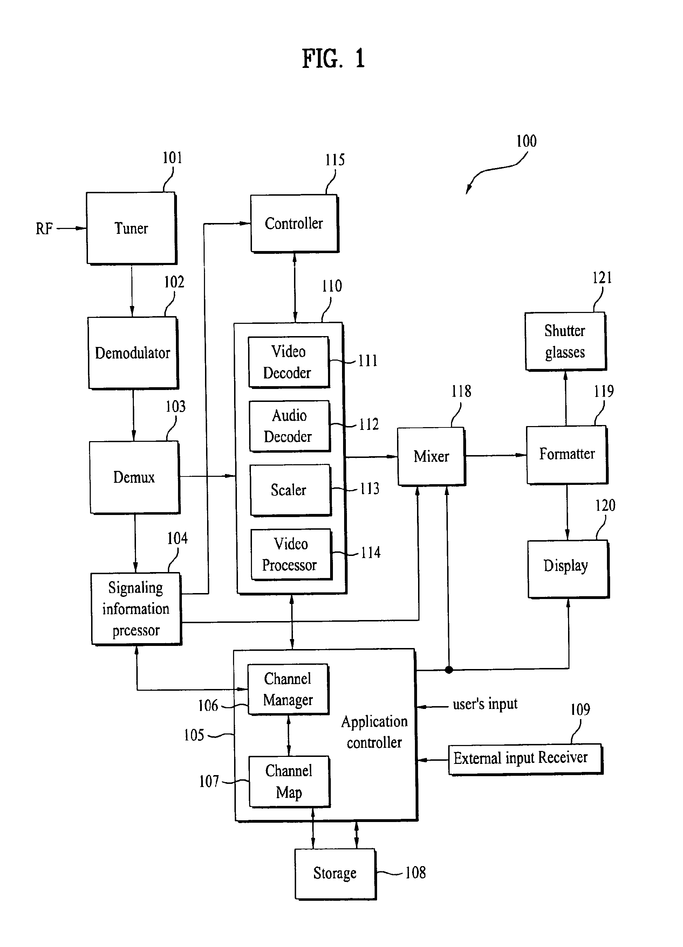

FIG. 1 is a block diagram illustrating an electronic device configured in accordance with the present invention.

In reference to FIG. 1, an electronic device according to this embodiment of the present invention includes a tuner 101, a demodulator 102, a demultiplexer 103 (Demux), a signaling information processor 104, an application controller 105, a storage 108, an external input receiver 109, a decoder/scaler 110, a controller 115, mixer 118, a formatter 119 and a display 120. Here, the electronic device 100 may be a personal computer system such as a desktop, laptop, tablet and handheld computer. The electronic deice 100 may be a mobile terminal such as a mobile phone, smart phone, digital broadcasting terminal, Personal Digital Assistants (PDA), Portable Multimedia Player (PMP), navigation and the like or a fixed-type electric appliance such as a digital TV and the like.

The electronic device 100 may a different configuration, rather than the configuration shown in FIG. 1. For example, the electronic device 100 may receive packets received from a network and it may further include a network interface configured to transmit the packets. In other words, the electronic device 100 receive IP packets which transmits audio/video data, signaling information and data configured to display GUI, from a service provider via the network interface. For example, the signaling information may be Program Specific Information/Program and System Information Protocol (PSI/PSIP) and Digital Video Broadcasting-service Information (DVB-SI). Also, the electronic device 100 may be embodied as set-top box with no display 120. In this case, the electronic device 100 may output a control signal to display images to an independent display device 120.

The tuner 101 tunes a channel according to control of a channel manager 106 and it receives a digital broadcasting signal.

The demodulator 102 demodulates the broadcasting signal according to demodulation method corresponding to a modulation method of the broadcasting signal.

The demultiplexer 103 demultiplexes audio/video data and signaling information from the demodulated broadcasting signal. Here, the demultiplexing may be implemented via filtering of Packet Identifier (PID). The demultiplexer 103 outputs the demultiplexed audio data/video data to the decoder/scaler 110 and the demultiplexed signaling information to the signaling information processor 104.

The signaling information processor 104 processes the demultiplexed signaling information and it outputs the processed information to the application controller 105, the controller 115 and the mixer 118. Here, the signaling information processor may include a database (not shown) storing the processed signaling information therein. The signaling information may include type information configured to represent whether the video data of the broadcasting signal is a 2D image o 3D image. Because of that, the signaling information processor 104 determines whether the received video data from the type information is a 3D image and it transmits the result of the determination to the controller 115 or the type information to the controller 115 to allow the controller 115 to determine that. If there is no type information in the signaling information, the signaling information processor 104 may report only the result to the controller 115.

The application controller 105 includes a channel manager 106 and a channel map 107. The channel manager 106 forms and manages the channel map 107 based on signaling information, and controls channel switching based on the channel map 107 in accordance with the input of the user.

The decoder/scaler 110 includes a video decoder 111, an audio decoder 112, a scaler 114 and a video processor 114.

The video/audio decoders 111 and 112 decode the demultiplexed video/audio data.

The scaler 1113 scales the video/audio data processed by the video/audio decoders 111 and 112 into signals sized properly with respect to output format.

The video processor 114 video-signal-processes the video data decoded by the video decoder 111 or determines a type of the input data according to the control signal of the controller 115. The video processor 114 may determine a type of video data if no type information exists in the above signaling information or if it cannot determine any type of the input video data from the type information on its own.

The controller 115 controls the decoder/scaler 110 to process corresponding video data properly based on the type of the video data determined by the video processor 114 or the type information inputted by the signaling information processor 104. The controller 115 may access the stored OSD data or GUI data and it may configurate GUI. Alternatively, the controller 115 may use the OSD data or GUI data transmitted by the application controller 105. Rather than that, the controller 115 may perform control for an overall system.

The application controller 105 senses user action. In this case, examples of the user action include selection of a physical button of the electronic device or the remote controller, action of a predetermined gesture or selection of a soft button on a touch screen display, action of a predetermined gesture recognized from a video taken by the image pickup device, and action of predetermined utterance recognized by voice recognition. The external input receiver 109 can receive a signal of user action corresponding to selection of a physical button of the remote controller, through the remote controller. In this case, an example of user action of the key input includes a GUI request for providing broadcast information. If the GUI request for providing broadcast information is received, the application controller 105 transmits the GUI request to the controller 115 or directly responds to the GUI request to configure the GUI for providing broadcast information. In this case, the application controller 105 may further include a data generator (not shown) for configuring the GUI. Also, the data generator may be configured as a separate module separately from the application controller and may generate data related to GUI configuration under the control of the application controller 105.

The application controller 105 can access data for displaying graphic of the GUI, from the storage unit 108, and can control the display 120 to display the accessed data through the display 120. Also, the application controller 105 can change the accessed data based on broadcast information, size information, depth information and location information. In this case, the application controller 105 can collect broadcast information from signaling information. Also, the size information indicates a size of the GUI, the depth information indicates a depth value of a stereoscopic image, and the location information indicates a location where the GUI will be displayed on the screen. The size information, the depth information and the location information can be set by the user, the application controller 105, or the controller 115. The application controller 105 will be described in more detail in the description of use scenario of each GUI, and thus its detailed description will be omitted at this time. Also, according to the present invention, the aforementioned controller 115 may serve as the application controller 105.

The storage unit 108 can previously store GUI data for providing GUI for broadcast information, which will be provided from the application controller 105 or the data generator in response to user action. Also, the storage unit 108 can store other broadcast information related to broadcasting reception.

The mixer 118 mixes and outputs the input of the signaling information processor 104, the decoder/scaler 110 and the application controller 105. For example, the mixer 118 mixes the GUI data with the received video data and it outputs the mixed data. The video data mixed with the GUI data displays an image having a GUI marked thereon.

The formatter 119 configurates the output of the mixer 118 to correspond to output format of a module. Here, formatter 119 may bypass a 2D image and it may process a 3D image in 3D format corresponding to format of the 3D image or an output frequency of the display according to the control of the controller 115 or the application controller 105, for example.

The display 120 displays contents and GUI and the like.

Related to the present invention, a method for representing a 3D image may be categorized into a glass-wearing type and a non-glass type. The glass-wearing type may be categorized into a passive type and an active type. The passive type uses a polarizing filter to divide an image into a left image and a right image. A type of wearing color glasses having a blue and a red for both eyes, respectively, is corresponding to the passive type.

According to the active type, a liquid crystal shutter is used to distinguish a left from right eye and the left eye and the right eye are shut sequentially in time, to distinguish left images from right images. In other words, the active type repeats the divided screens periodically and the user views them, wearing the glasses having an electronic shutter installed therein, which is synchronized in the period to operate. The active type may be called as 'time split type' or 'shuttered glass type'. The non-glass-wearing type may include a lenticular type and a parallax barrier type. In the lenticular type, a lenticular lens plate having cylindrical lens arrays arranged thereon vertically is installed in front of an image panel. In the parallax barrier type, a barrier layer having periodic slits is provided on an image panel.

The present specification embodies a stereoscopic type out of 3D display types, specifically, an active type out of the stereoscopic types. Here, this embodiment is described, presenting shutter-glasses as medium of the active type and the present invention is not limited thereto. As described later, the present invention may be applicable to cases of using other mediums.

The formatter 119 outputs the 3D image data to the display 120 and it generates a synchronization signal (Vsync) related to the configurated 3D image data for synchronization to be suitable when viewing the output 3D image data with shutter glass 121. After that, the formatter 119 outputs the generated synchronization signal to an IR emitter (not shown) provided in the shutter glasses to allow the 3D image data to be viewable in the shutter glasses, with being suitable to the display synchronization.

The IR emitter receives the generated synchronization signal from the formatter 119 and it outputs the signal to a light receiver (not shown) of the shutter glasses 121. The shutter glasses 121 adjusts a shutter open period according to the synchronization signal received via the RI emitter (not shown) to be suitable to the synchronization of the 3D image displayed on the display 120.

Hereinafter, for description of a method for providing a GUI in accordance with the present invention, use scenario of each GUI will be described exemplarily.

As described above, in order to provide a GUI that includes information based on a request of a user, the present invention is intended that an overlap zone between a video previously viewed by a user, i.e., broadcast program or channel, and the GUI is minimized to allow the user to control the GUI while viewing the video.

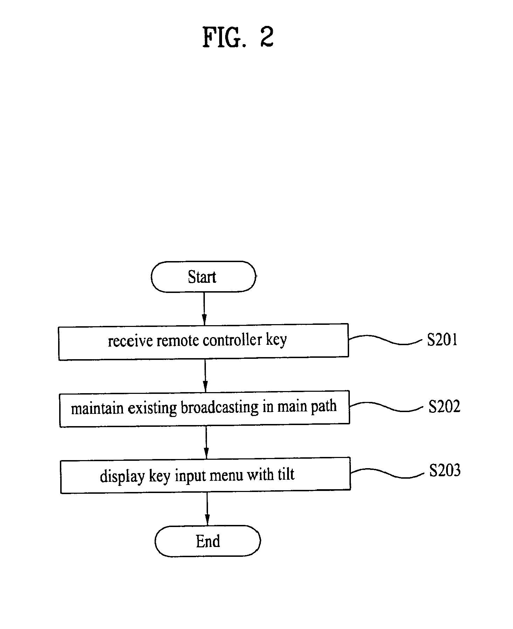

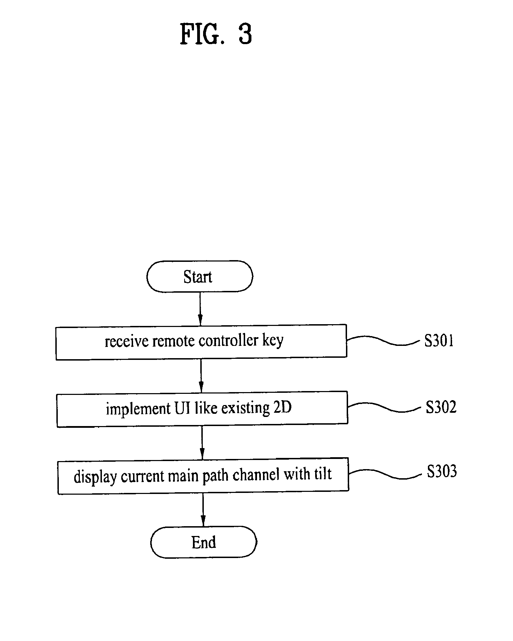

FIG. 2 and FIG. 3 are flowcharts illustrating basic concept of a method for providing a GUI in accordance with the present invention.

Referring to FIG. 2, if a specific function request of a user, for example, broadcast information request, is received from the external input receiver 109 (S201), the electronic device 100 continues to provide the video, which is previously viewed by the user, from the main screen (S202), collects information corresponding to the request by identifying the broadcast information request received in the step S201, and configures the GUI for the collected information.

The electronic device 100 tilts the configured GUI for broadcast information from the main screen to remove or minimize the overlap zone with the video currently viewed by the user (S203).

Unlike FIG. 2, referring to FIG. 3, if a specific function request of a user, for example, broadcast information request, is received from the external input receiver 109 (S301), the electronic device 100 collects information corresponding to the request and configures the GUI for broadcast information. The electronic device 100 provides the configured GUI for broadcast information to the main screen (S302), and outputs the video previously viewed by the user to be displayed with tilt (S303).

According to the basic concept of FIG. 2 and FIG. 3, the overlap zone between the GUI and the video previously viewed by the user is removed or minimized, and if any one of the GUI and the video previously viewed by the user is arranged on the main screen, the other one is tilted. This method may be set previously by the user, or the corresponding GUI for broadcast information may be provided randomly based on selection of the user or preference of the corresponding GUI or video in the electronic device 100.

Hereinafter, use scenario of each GUI according to the present invention will be described appropriately based on the methods of FIG. 2 and FIG. 3 without limitation to any one of the methods.

Also, the user may not view the broadcast screen currently. Accordingly, this case will be described together.

Hereinafter, a method for configuring a GUI in 3D in accordance with the present invention will be described in brief.

The electronic device 100 processes the 3D image data by using a principle of a stereoscopic type. According to the principle of the stereoscopic type, a single object is photographed by two cameras located in different positions and right image data and left image data are generated. Each of the generated right and left image data is separated and inputted to cross human right and left eyes at right angles, respectively. After that, the image data inputted via the human right and left eyes may be combined in a human brain, to generate a 3D image. The expression of 'cross human right and left eyes at right angles' means that each of the image data will not cause interference with each other.

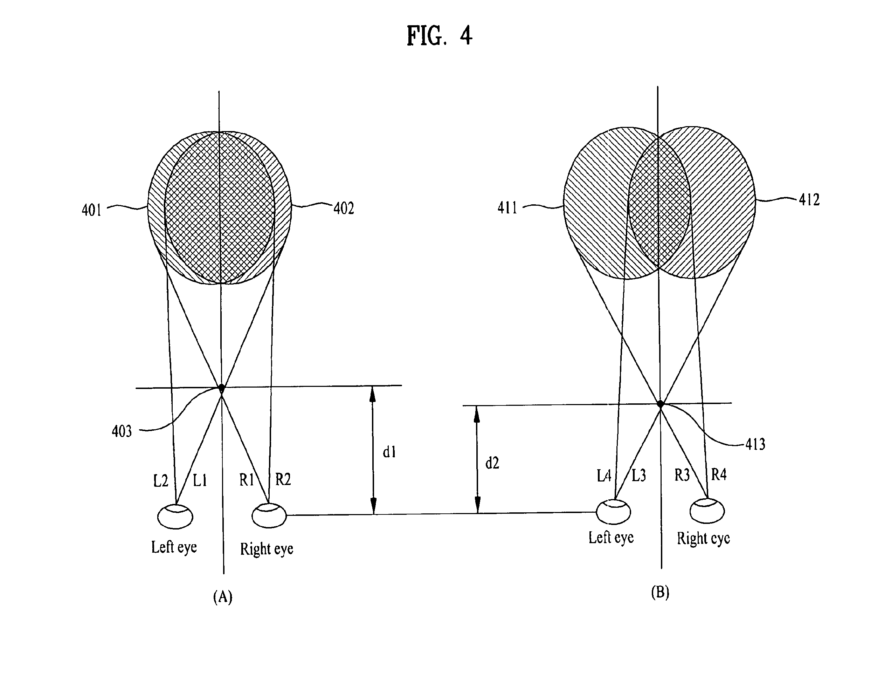

FIG. 4 is a diagram illustrating perspective based on an interval or time difference (hereinafter, referred to as "interval") between left image data and right image data.

FIG. 4 (a) illustrates a location 403 of an image formed by combination of the both data, when the internal of the right image data 401 and the left image data 402 is narrow. FIG. 4 (b) illustrates a location 413 of an image formed when the interval of right image data 411 and left image data 412 is wide.

In other words, FIGS. 4 (a) and (b) shows a level of perspective between the images formed at difference locations based on the interval of the right image data and the left image data in the image signal processing device.

In reference to FIG. 4 (a), when drawing expended lines (R1 and R2) toward a side and another side of the right image data 401 seen by a human right eye and expended lines (Ll and L2) toward a side and another side of the left image data 402 seen by the human left eye, the image is formed at the location 403 at which the expended line (R1) for the right image data crosses the expended line (L1) for the left image data in a predetermined distance (d1) apart from the right and left eyes.

In reference to FIG. 4 (b), the image is formed at the location 213 at which an expended line (R3) for the right image data crosses an expended line (13) for the left image data in a predetermined distance (d2) apart from the right and left eyes.

Here, comparing d1 shown in FIG. 4 (a) with d2 shown in FIG. 4 (b) which represents the distance to the locations 403 and 413 from the right and left eyes, d1 is farther than d2 from the right and left eyes. That is, the image of FIG. 4 (a) is formed more distant from the right and left eyes than that of FIG. 4 (b).

This is caused by the interval of the right image data and the left image data (an east-to-west direction with respect to the drawings).

For example, the interval of FIG. 4 (a) between the right image data 401 and the left image data 402 is relatively narrow, compared with the interval of FIG. 4 (b) between the right image 403 and the left image data 404.

As a result, extracting based on FIGS. 4 (a) and 4 (b), as the interval between the image data is narrower, the image formed by the combination of the right and left image data looks formed more distant from the human eyes.

According to the above principle described above, the GUI itself provided as shown in FIGS. 3(a) and (b) may be configured of 3D images or only predetermined items provided in the GUI may be configured of 3D images (not shown).

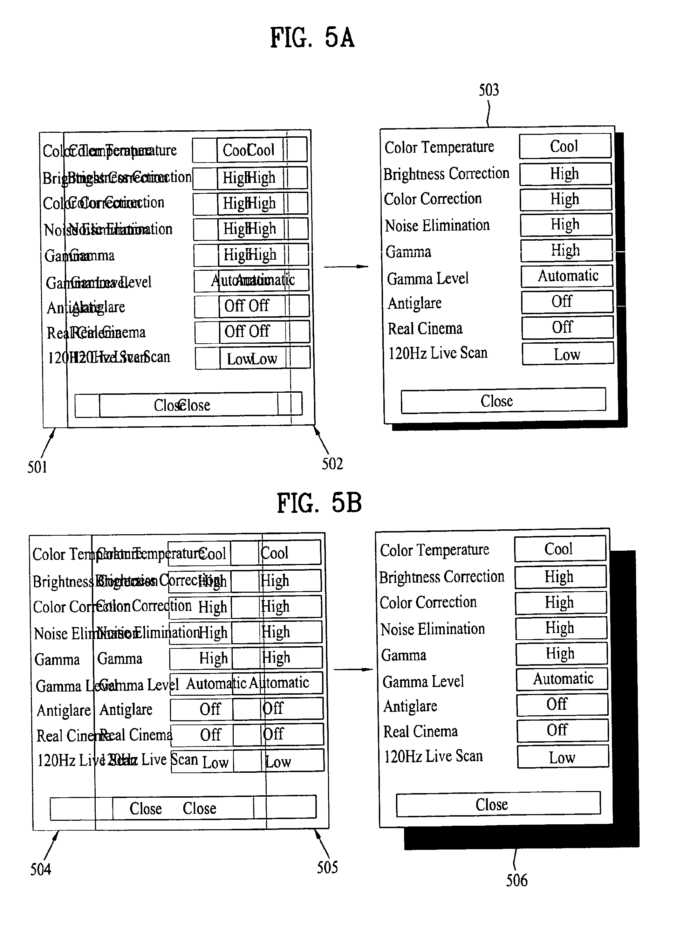

FIG. 5 is a diagram illustrating an example of a method for implementing a 3D GUI in accordance with the present invention.

FIGS. 5 (a) and 5 (b) represent GUI including a plurality of items as 3D image. In case of FIG. 5 (a), an interval between left image data 501 and right image data 502 composing GUI is narrow. In case of FIG. 5 (b), an interval between left image data 304 and right image data 505 composing GUI is wide.

As a result, according to the principle of FIG. 4, an image (503) is formed distant from the human eyes and the image (503) looks far in 3D GUI (503 and 506) represented according to the interval of each image data shown in FIGS. 5(a) and 5(b). An image (506) is formed close to the human eyes and the image (506) looks near, in other words, relatively protrusive in 3D GUI 506 represented in FIG. 5 (b). The above principle which adjusts the interval between the left and right image data composing the GUI may change a predetermined degree of depth enough to achieve a 3D effect.

Use Scenario

Hereinafter, use scenarios for providing various GUIs (hereinafter, referred to as 'broadcast information GUI') in an electronic device 100 in accordance with a request of a user will be described.

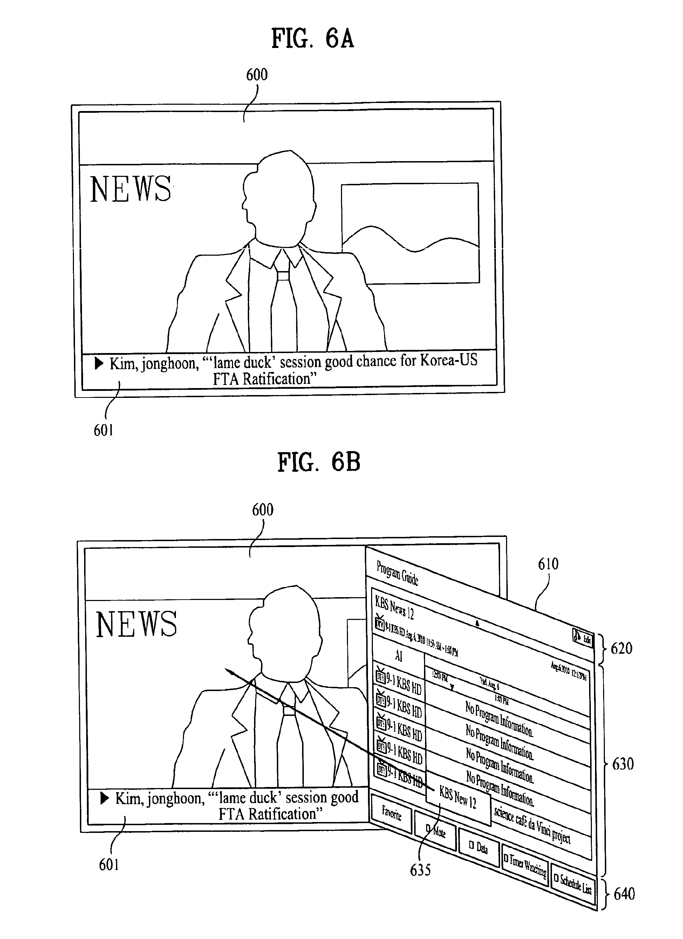

FIG. 6 is a diagram illustrating a first embodiment of a method for providing a GUI in accordance with the present invention.

FIG. 6 illustrates a method for providing broadcast information GUI, i.e., EPG when a user indicates a desired video by using a remote controller or requests EPG while viewing a current video 600 as illustrated in FIG. 6(a).

Referring to FIG. 6(a), one video 600 is output to a main screen, and data related to data broadcasting are provided on a lower screen 601 in the form of text.

In this case, if the user indicates the video by using an indicator such as a cursor through the remote controller or requests EPG, as illustrated in FIG. 6(b), the electronic device 100 identifies information on the indication or request of the user.

As a result, if the indication or request of the user is identified as EPG request, the electronic device 100 collects information for providing EPG and configures the EPG. The electronic device 100 continues to provide the video previously viewed by the user through a main path, i.e., screen, and outputs the configured EPG from the screen by tilting it (right side of screen in FIG. 6(b)).

As the EPG is output by tilt, the overlap zone between the EPG and the video previously viewed by the user can be minimized.

Also, as illustrated in FIG. 6(b), the EPG is configured based on information that includes the video currently viewed by the user, and the location of the corresponding video on the EPG may be notified through an indicator such as an arrow or may be provided differentially. In this case, 'differentially' means the location of the corresponding video is provided by giving more depth or different color to the corresponding zone, for example.

Accordingly, the user can operate a GUI for desired information provided in a tilt type while viewing the view. In this case, the video currently viewed by the user and the EPG may be provided to oppose each other. Namely, the EPG may be output to the screen and the video may be provided in a tilt type.

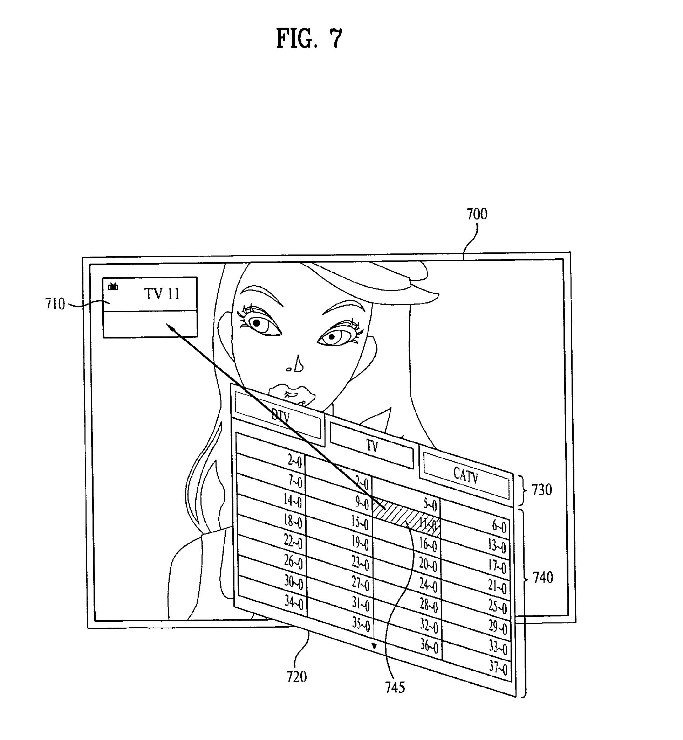

FIG. 7 is a diagram illustrating a second embodiment of a method for providing a GUI in accordance with the present invention.

FIG. 7 illustrates a method for providing a GUI for channel edit based on a request of a user while viewing a video.

Referring to FIG. 7, the electronic device 100 may provide a video on a screen 700 and may provide a GUI for channel information on one zone 710 (for example, left upper end of screen) of the screen. For example, the GUI for channel information can be output for a predetermined time if the user requests channel information on the video currently viewed by himself(herself) or channel switching.

At this time, if the user clicks or indicates the channel information 710 through the remote controller, or requests a channel edit request, the electronic device 100 collects channel edit GUI information by identifying the indication or request, and configures a channel edit GUI 720.

The electronic device 100 can output the channel edit GUI 720 on the screen in a tilt type to remove or minimize the overlap zone with the video currently viewed by the user, as illustrated in FIG. 7.

The channel edit GUI 720 includes a channel type, i.e., a type of media for providing a corresponding channel, such as terrestrial, satellite, and cable, in a first zone 730, and includes a plurality of channels, which are provided through the media of the first zone 730, in a second zone 740. At this time, among the channels included in the second zone, the same channel 745 as the current channel can be expressed differentially from the other channels in such a manner that channel information is notified through an indicator such as an arrow, or depth or different color is given to the channel information.

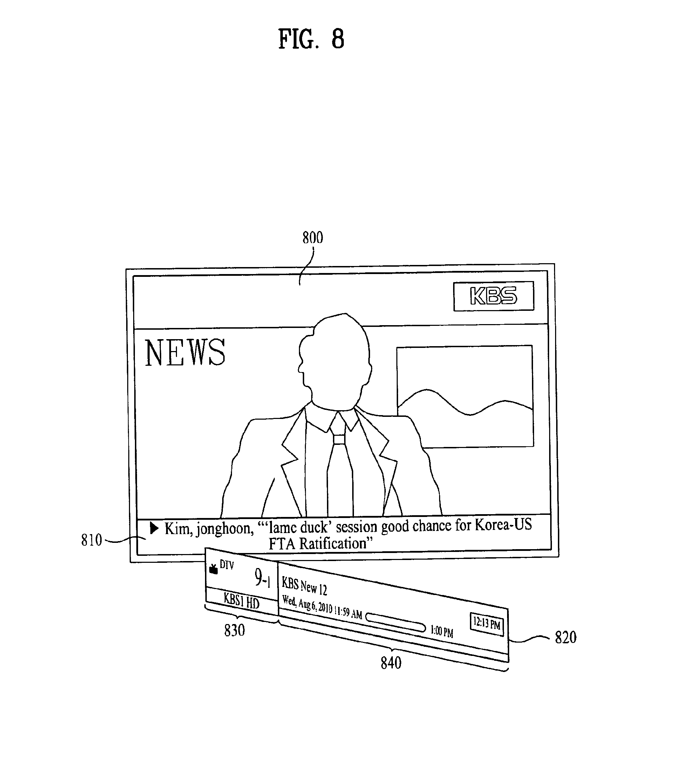

FIG. 8 is a diagram illustrating a third embodiment of a method for providing a GUI in accordance with the present invention.

FIG. 8 illustrates a method for providing brief information GUI in accordance with a request of a user in respect of a video currently viewed by the user.

Referring to FIG. 8, the electronic device 100 outputs one video 800 on the screen, and provides data broadcast information 810 at a lower portion of the screen in the form of text. In this case, if a brief information request related to the video currently viewed by the user is received from the user through the remote controller, the electronic device 100 collects information on brief information related to the output video by identifying the received request and configures a brief information GUI 820.

At this time, the electronic device 100 can provide the brief information GUI 820 on the lower part of the screen in the form of tilt as illustrated in FIG. 8. Accordingly, according to the present invention, the electronic device 100 can provide brief information based on the request of the user so as not to overlap with the video currently viewed by the user or so as to minimize an overlap zone. This may equally be applied to more brief information. The brief information GUI 820 includes channel information and broadcasting station information in a first zone 830 and time information of a corresponding video and other brief information in a second zone 840.

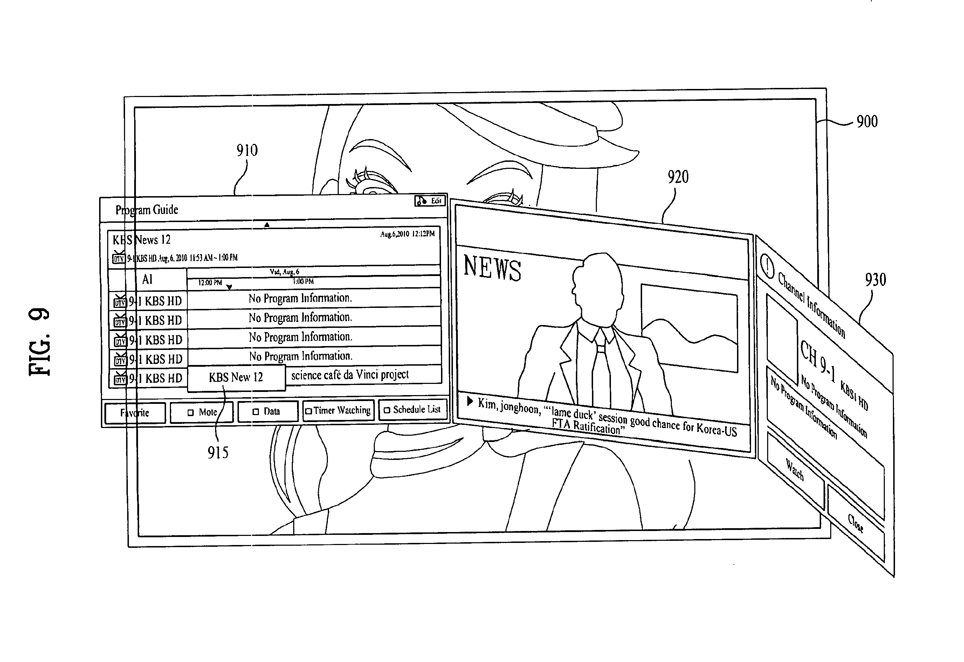

FIG. 9 is a diagram illustrating a fourth embodiment of a method for providing a GUI in accordance with the present invention.

FIG. 9 relates to a method for providing a sub menu when the sub menu is selected on a GUI illustrated in FIG. 6, or a GUI provided in accordance with the related art.

Referring to FIG. 9, the electronic device 100 provides one video 900 on the screen. If the user indicates the video 900 or EPG request is received, the electronic device 100 collects EPG information by identifying the indication or request and configures EPG 910. In this way, the EPG information can be provided in the same manner as FIG. 6.

Afterwards, if information 915 on other video not the video viewed by the user on the provided EPG 910 is selected from the user, as illustrated in FIG. 9, the electronic device 100 can configure a GUI 920 displaying the video corresponding to the selected information 915 at a side of the previously provided EPG 910. In this case, the GUI 920 can be more tilted than the EPG 910.

In addition, if the user requests detailed information on the corresponding channel, the electronic device 100 configures channel information GUI 930 by collecting information on the corresponding video or channel at the side of the provided GUI 920. This channel information GUI 930 can be tilted differentially from the other GUI.

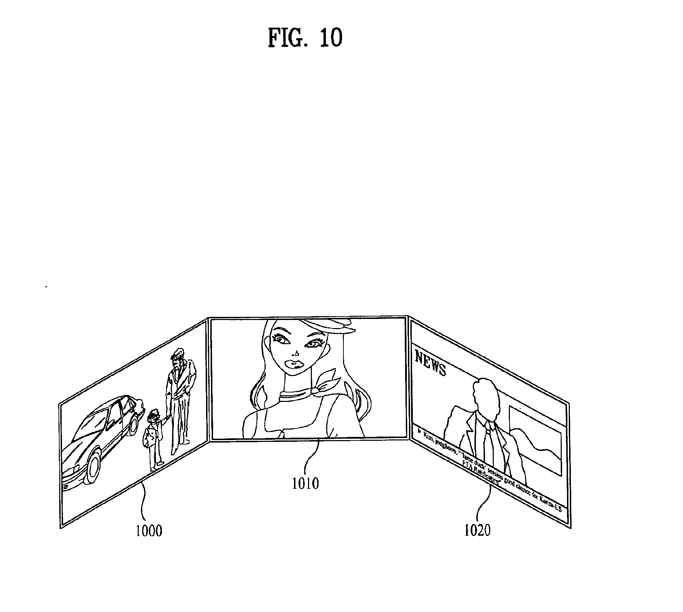

FIG. 10 is a diagram illustrating a fifth embodiment of a method for providing a GUI in accordance with the present invention.

FIG. 10 relates to a method for providing a GUI for channel browser.

Referring to FIG. 10, if the user requests a channel browser through the remote controller, the electronic device 100 collects information for channel browsers, configures channel browsers 1000 to 1020, and provides the configured channel browsers as shown.

According to the present invention, in FIG. 10, the channel browsers 1000 to 1020 are provided in such a manner that channel browser screens are not provided on the same plane but tilted appropriately.

As the channel browsers are configured as above in accordance with the present invention, the electronic device 100 can provide a clearer channel-browsed video more greatly. For example, although three channel browser screens are provided in FIG. 10, if more channel browser screens should be provided, the electronic device 100 configures the channel browser screens in the form of cubic (not shown) to allow the user to access the channel browsers more easily and simply.

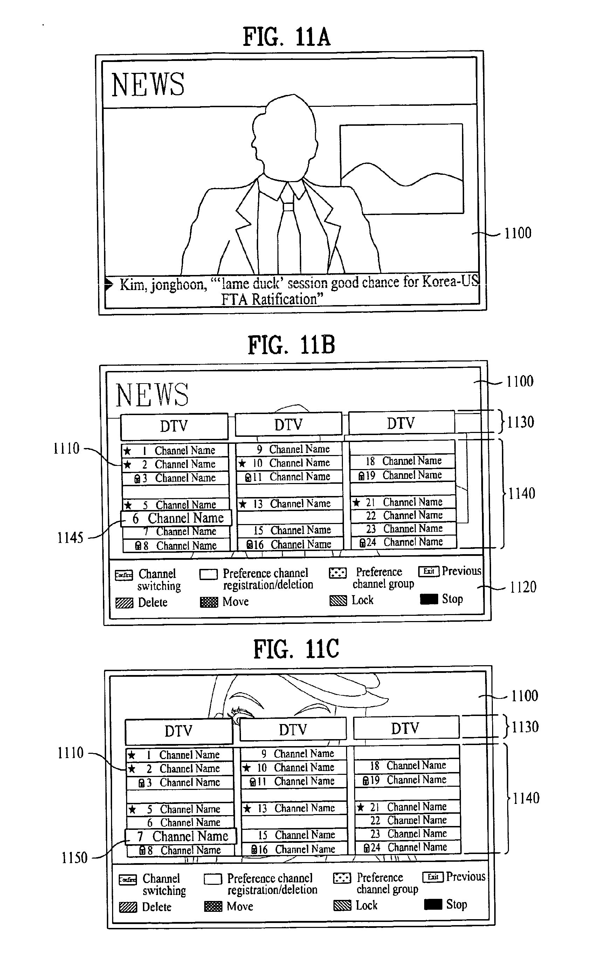

FIG. 11 is a diagram illustrating a sixth embodiment of a method for providing a GUI in accordance with the present invention.

Referring to FIG. 11, if a channel edit request is received from the user while the electronic device 100 is providing a video of a specific channel, the electronic device 10 provides a channel edit GUI in accordance with the request and also provides a video on the channel selected from the user through the channel edit GUI in the form of background screen or picture in picture (PIP), whereby convenience in channel edit can be provided.

The electronic device 100, as illustrated in FIG. 11 (a), provides a video 1100 of a specific channel on the screen. If a request of a channel edit GUI 1110 is received from the user, the electronic device 100 collects information on the channel edit GUI 1110 in accordance with the request, configures the channel edit GUI 1110 and provides the configured channel edit GUI 1110 as illustrated in FIG. 11 (b). In this case, an additional function item 1120 for control of the channel edit GUI 1110 or button information for accessing the additional function item 1120 can be provided at the lower portion of the channel edit GUI 1110 or the lower screen. Examples of the button information include Delete, Move, Lock and Stop. Also, broadcast information on channel information provided to the second zone 1140 on the channel edit GUI can be displayed in the zone 1120.

A channel type or media type of the channel edit GUI 1110 is displayed in the first zone 1130, and channel information based on each channel type or media type can be provided to the second zone 1140. For example, referring to FIG. 11 (b), supposing that the channel currently viewed by the user is channel no. 6 of DTV channel, an item 1145 displaying the corresponding channel may have a color or depth different from that of the other items.

Although the channel no. 6 is provided in FIG. 11 (b), referring to FIG. 11 (c), if a channel no. 7 1150 is selected by the user, the electronic device 100 may provide a video corresponding to the selected channel at a side of the previously provided channel edit GUI 1110 similarly to the aforementioned description, or may provide the video in the form of background screen or PIP as illustrated in FIG. 11 (c), whereby convenience in edit of the corresponding channel can be provided to the user.

Also, although the channel edit GUI 1110 is output on the screen in FIG. 11 (b) and FIG. 11 (c), it is displayed to be more protruded than the screen when it is configured in a 3D type, whereby the screen where the video currently viewed by the user is provided may be recognized as background.

If the user selects a specific item of the channel edit GUI, detailed information on the corresponding item is provided in the form of tilt, whereby convenience in edit of the corresponding channel can be provided to the user.

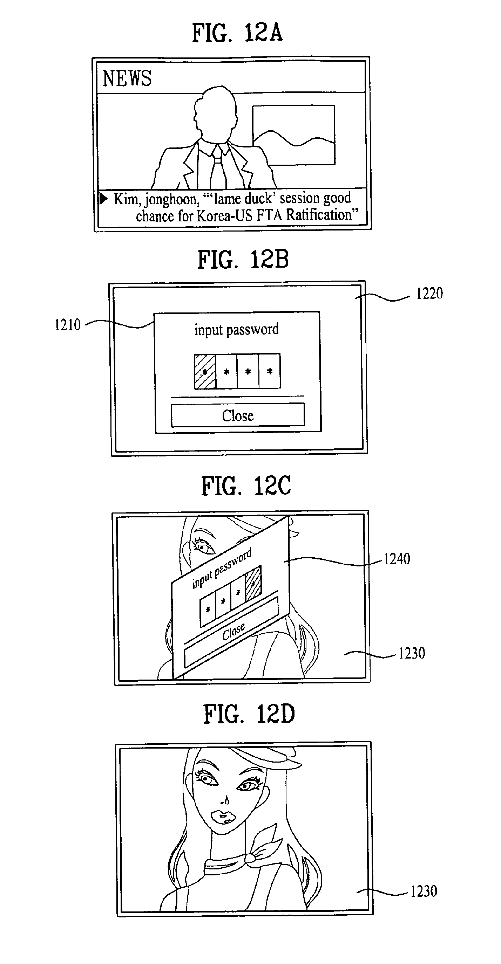

FIG. 12 is a diagram illustrating a seventh embodiment of a method for providing a GUI in accordance with the present invention.

FIG. 12 illustrates an operation of the electronic device 100 when the user accesses a locked channel during channel surfing.

If the user performs channel surfing through the remote controller, the electronic device 100 provides a video currently in service by decoding the video from each of the surfed channels as illustrated in FIG. 12(a).

If the user requests channel switching to a locked channel during channel surfing, the electronic device 100 does not provide a video provided by a corresponding channel but provides information for unlocking the locked channel, i.e., a GUI for input of a password as illustrated in FIG. 12(b). At this time, a background screen of the GUI for password input, i.e., main screen will not be provided as illustrated in FIG. 12(b).

The electronic device 100 determines whether a password, which is input through the remote controller to identify whether a user is the one who can legally use the corresponding channel, is correct.

As a result, if the input password is correct, the electronic device 100 provides a broadcast program through a main screen by tuning the corresponding channel as illustrated in FIG. 12(c), and at the same time configures the GUI for password in the form of tilt, whereby the GUI for password gradually disappears from the screen.

Accordingly, the broadcast program of the changed channel will be provided finally as illustrated in FIG. 12(d).

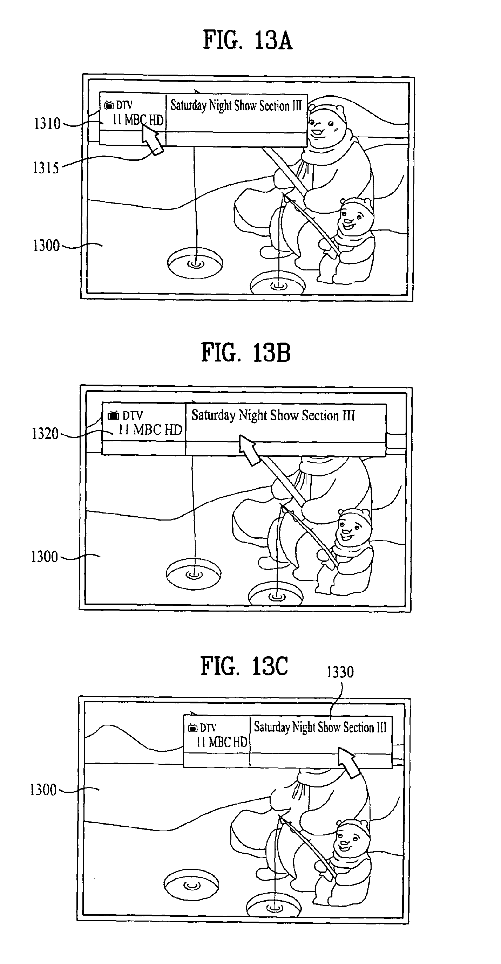

FIG. 13 is a diagram illustrating an eighth embodiment of a method for providing a GUI in accordance with the present invention.

FIG. 13 relates to a method for controlling a location of a GUI provided in accordance with a request of a user. Hereinafter, for convenience of description, brief information GUI will exemplarily be described as the GUI.

Referring to FIG. 13(a), one video 1300 is provided on the screen, and brief information GUI 1310 is provided in accordance with the request of the user.

The brief information GUI 1310 can be overlapped with a logo on a video provided through the screen or channel information. For example, referring to FIG. 13(a), as the brief information GUI 1310 partially covers the logo on a video, the user cannot recognize the corresponding logo well.

In the digital broadcast receiver according to the related art, since the location of each GUI is fixed, when the GUI is overlapped with other information as described above, the user cannot view the overlapped information well if the corresponding GUI is not removed, whereby inconvenience has been caused to the user.

In this respect, in the present invention, the location of the GUI provided as illustrated in FIG. 13(b) and FIG. 13(c) can be moved to a desired zone or location of the user at the user's convenience. At this time, the user can move the location of the GUI by dragging the corresponding information through a pointing remote controller. Also, if the size of the brief information GUI 1310 is not sufficient, the user can control the size of the brief information GUI as well as the location of the GUI previously provided from the electronic device 100 by requesting a control of the size of the corresponding GUI through the remote controller.

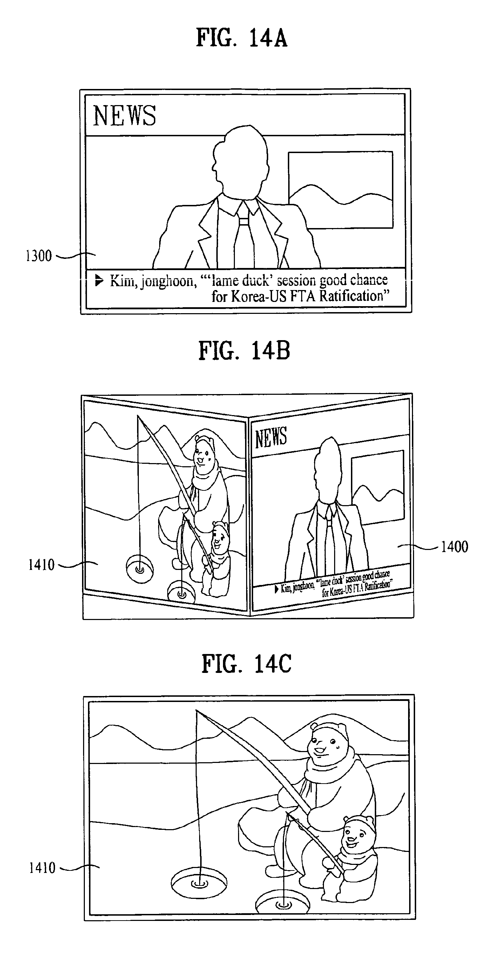

FIG. 14 is a diagram illustrating a ninth embodiment of a method for providing a GUI in accordance with the present invention.

FIG. 14 relates to a method for providing a video of a current channel and a video of next channel when channel browsing is performed in accordance with a request of a user.

The electronic device 100, as illustrated in FIG. 14(a), provides a video 1400 of one channel on the screen. In this case, if the user requests channel switching to another channel, for example, next channel, the digital broadcast receiver according to the related art removes the video 1400 of a previous channel from the screen and outputs only a video 1410 of the requested channel.

However, in the present invention, as illustrated in FIG. 14(b), the video 1400 of the previous channel and the requested channel 1410 are output to one screen at the same time, and then provided to the user. In this case, the video 1400 of the previous channel is provided to, but not limited to, the right side of the screen, and the video 1410 of the requested channel is provided to, but not limited to, the left side of the screen. According to the present invention, the electronic device 100 can provide the video 1400 of the previous channel and the video 1410 of the requested channel in the form of tilt without providing them by simply splitting the screen.

In this case, if the user selects the video 1410 of the requested channel not the video 1400 of the previous channel, the video 1410 of the requested channel can be provided to the entire screen as illustrated in FIG. 14(c).

Although the screen is split in the form of still to provide videos of two channels in FIG. 14(b), if the user requests channel switching in FIG. 14(a), the channel is configured in the form of tilt as illustrated in FIG. 14(b), whereby the channel is finally switched from the left side to the right side as illustrated in FIG. 14(c).

To this end, the user can drag the corresponding channel by using either the pointing remote controller or up/down key of a 4-way remote controller. For example, it is supposed that FIG. 14(a) is a broadcast program 'A' of a channel 14-2. If the user drags the channel to the right side through the pointing remote controller as illustrated in FIG. 14(b), a broadcast program 'B' of a channel 14-3 will be provided as illustrated in FIG. 14(c). Also, if the user drags the channel to the left side, a broadcast program 'C' of a channel 14-1 may be provided.

Also, although the videos of two channels are provided in FIG. 14(b), videos of a plurality of channels may be provided at different tilt types.

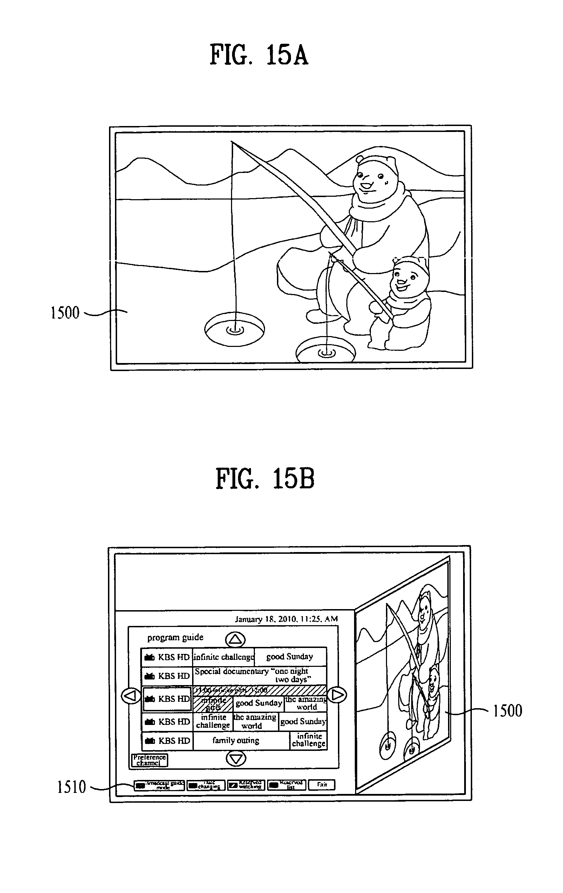

FIG. 15 to FIG. 18 are diagrams illustrating tenth to thirteenth embodiments of a method for providing a GUI in accordance with the present invention.

FIG. 15 to FIG. 18 illustrate that a broadcast program currently viewed by the user is split on one screen to provide broadcast information similarly to FIG. 14. In this case, for convenience of description, EPG will be described as an example of the broadcast information.

The electronic device 100, as illustrated in FIG. 15(a), provides one video 1500 on the screen. If the user requests EPG through the remote controller, the electronic device 100 collects EPG information by identifying the request and configures EPG.

For example, the electronic device 100 can provide the EPG 1510 as illustrated in FIG. 15(b). In other words, referring to FIG. 15(b), the EPG 1510 and a video 1500 currently viewed by the user are configured on one screen in the form of tilt. In FIG. 15(b), the EPG 1510 based on the request of the user is first displayed on the screen, and the video currently viewed by the user is configured in the form of tilt. However, although not shown, it will be apparent that the video currently viewed by the user is first displayed on the screen and the EPG 1510 is configured in the form of tilt.

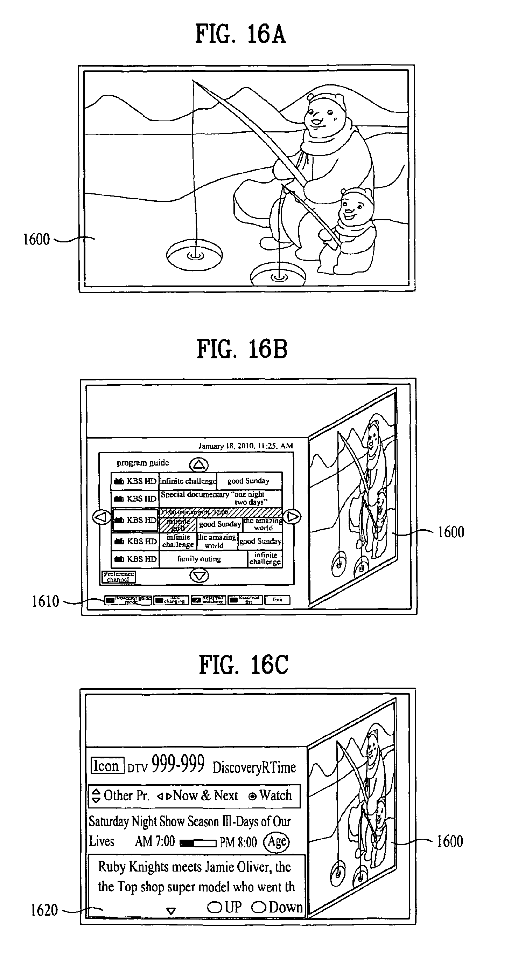

Since FIG. 16(a) and FIG. 16(b) correspond to FIG. 15(a) and FIG. 15(b), respectively, their detailed description will be omitted. In the screen configured as illustrated in FIG. 16(b), if the user requests detailed information on the video currently viewed by the user through the EPG, the electronic device 100 provides the requested detailed information.

Referring to FIG. 16(c), the video 1500 currently viewed by the user is provided in the form of tilt, and the requested detailed information is first configured instead of EPG or is provided on the EPG.

The user selects a function that can be provided from the detailed information or a broadcast screen in FIG. 16(c), whereby the user may return to the screen of FIG. 16(a).

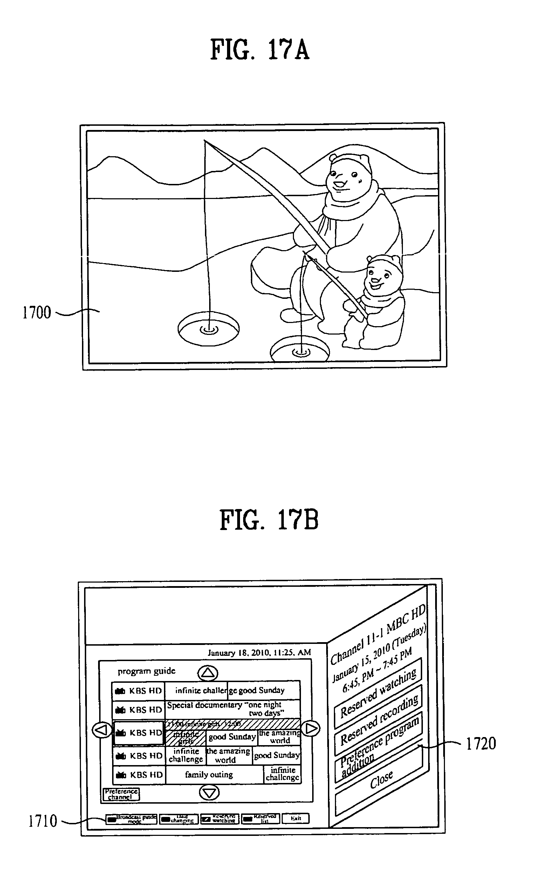

In FIG. 17 unlike FIG. 15, if the user requests EPG, the requested EPG 1710 and a GUI for a function associated with the EPG are provided in the form of tilt. However, it is not required that the GUI provided in the form of tilt should be the GUI for a function associated with the previously provided EPG.

The electronic device 100, as illustrated in FIG. 17(a), provides one video 1700 on the screen. In this case, if the user requests EPG through the remote controller, the electronic device 100 identifies the request, configures EPG by collecting EPG information, and provides the configured EPG on the screen.

In FIG. 17(b), when the user requests EPG generally in accordance with the present invention, brief information or detailed information on a specific program on the EPG, recording, reserved recording, and time shift are mainly requested. Considering this, the electronic device provides the EPG to a predetermined zone of the screen. If the aforementioned request is received, the electronic device 100 configures a GUI based on the corresponding request and provides the configured GUI in the form of tilt.

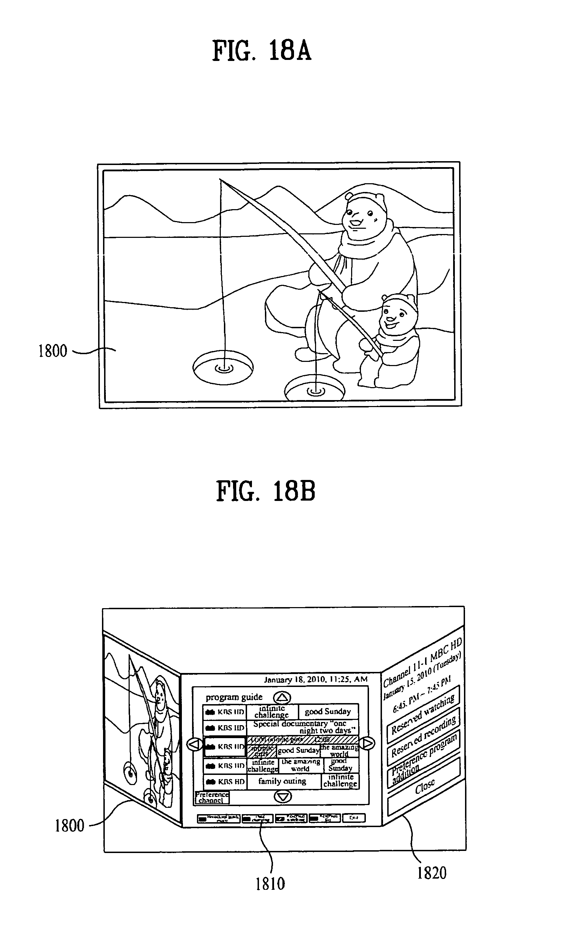

In FIG. 18(b) unlike FIG. 17(b), the video 1800 currently viewed by the user is also provided.

Alternatively, as illustrated in FIG. 18(b), if there are several requests of the user on the EPG 1810, GUIs based on the respective requests may be configured to have different tilts.

The location of the GUI or the number of GUIs provided on the screen is not limited to FIG. 17 and FIG. 18. For example, although the EPG screen is provided at the center, the broadcast screen 1800 is provided at the left tilt and the detailed information 1820 is provided at the right tilt in FIG. 18(b), the present invention is not limited to the example of FIG. 18(b). The upper and lower portions not the left and right sides may be tilted, and all of the left and right sides and the upper and lower portions may be tilted.

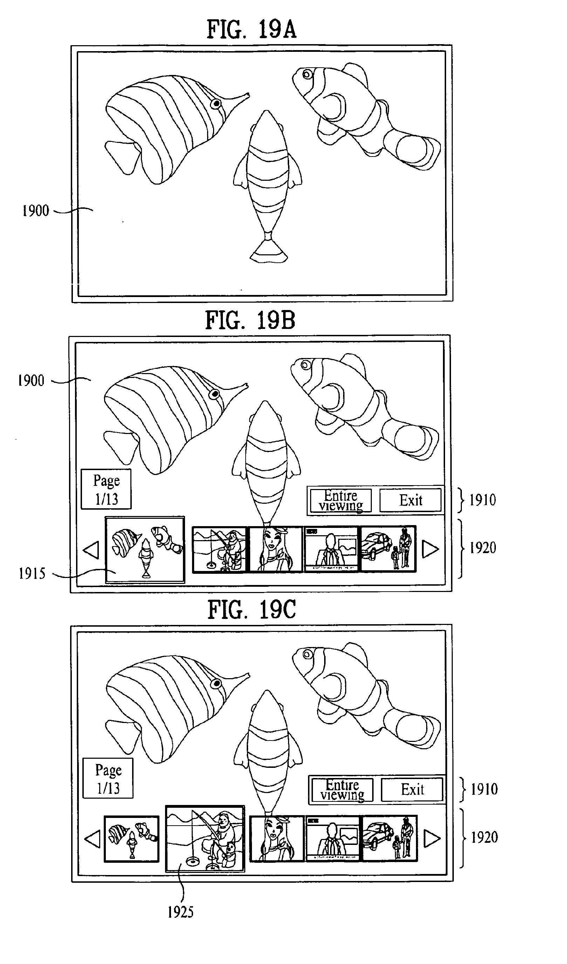

FIG. 19 is a diagram illustrating a fourteenth embodiment of a method for providing a GUI in accordance with the present invention.

FIG. 19 illustrates that a simple video channel list is provided in accordance with a request of a user.

The electronic device 100, as illustrated in FIG. 19(a), provides one video 1900 on the screen. In this case, if the user requests a simple video channel list through the remote controller, the electronic device 100 identifies the request, configures a GUI for the simple video channel list by collecting simple video channel list information, and provides the configured GUI as illustrated in FIG. 19(b) and FIG. 19(c).

Referring to FIG. 19(b), the electronic device 100 provides a simple video channel list GUI 1920 on the lower screen in the form of tilt in accordance with the request of the simple video channel list from the user, and provides information 1910 of the selected simple video channel on the GUI 1920. For example, the information 1910 includes information indicating how many simple video channels are ahead of the selected simple video channel 1915, an entire viewing item for switching from the channel currently viewed by the user to the selected simple video channel, and an exit item for exiting from the corresponding simple video channel list GUI.

The electronic device 100 can provide the simple video channel 1915 surfed or selected by the user from the simple video channel list 1920 provided as illustrated in FIG. 19(b) by allowing the selected simple video channel 1915 to be more tilted, giving depth to the selected simple video channel 1915 so as to be displayed to be protruded, or enlarging the size of the selected simple video channel 1915.

Although the simple video channel list has been described exemplarily, other video related to the video currently viewed by the user or broadcast information may be provided as illustrated in FIG. 19. For example, if the broadcasting program currently viewed by the user is a series program, other episode of the same series or information on other series may be provided as described above. Also, if there are many kinds of information to be provided, the information may be provided in the form of folder and the selected folder may be unfolded as shown.

Alternatively, a reserved recording item or recorded item may be provided as described above.

Also, although the broadcast information is provided on the lower screen in FIG. 19, the present invention is not limited to the location of FIG. 19. For example, the broadcast information may be provided in such a manner that it is configured at the right side of the screen in the form of tilt.

Alternatively, the folder may be provided on the lower screen, and information included in the selected folder may be provided at the side of the screen, as illustrated in FIG. 19.

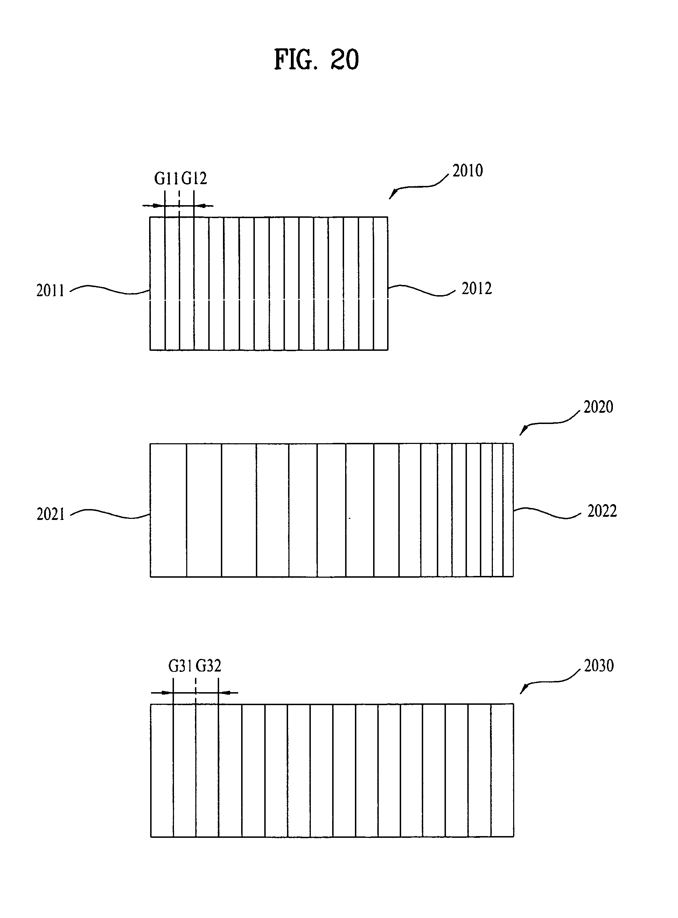

FIG. 20 is a diagram illustrating a first embodiment of a method for scaling image data.

Referring to FIG. 20, the electronic device 100 generates left image and right image by using a 2D image 2010 to display the 2D image 2010 as a stereoscopic image. The electronic device 100 generates one of left image and right image by linearly scaling the 2D image, and generates the other one by non-linearly scaling the 2D image. The left image 2020 is generated by non-linear scaling in FIG. 20. Also, the 2D image 2010, the left image 2020 and the right image 2030 are split into a plurality of split images in a vertical direction, and the split images of the left image 2020 and the right image 2030 are generated by scaling of the split images of the 2D image 2010. In this case, the image data displaying the 2D image 2010 may be a set of pixel data displaying a GUI, or may be image data displaying image of broadcast contents.

The left image 2020 can be generated by non-linear scaling of a split interval of each of a plurality of split images, so that a width of the split interval is reduced towards the right side 2012 of the 2D image 2010 from the left side 2011 of the 2D image 2010. In other words, the split intervals G11 or G12 of the respective split images are scaled differently from each other. For example, if the 2D image 2010 is split in a horizontal direction, the left image can be generated by non-linear scaling of the split interval of each of a plurality of split images, so that the width of the split interval is reduced towards the lower side from the upper side. Also, the left image may be generated by non-linear scaling of the split interval of each of a plurality of split images, so that the width of the split interval is reduced towards the upper side from the lower side.

In order to generate the right image 2030 that forms one stereoscopic image together with the left image 2020, the electronic device 100 does not scale the split intervals of the images differently from each other. In other words, the right image 2030 is generated by linear scaling of the split images, wherein the intervals G31 or G32 of the split images are maintained equally.

The split interval of each of a plurality of split images is controlled non-linearly, so that the width of the split interval is reduced towards the right side 2022 of the left image 2020 from the left side 2021 of the left image 2020. If the split interval of the right image 2030 is controlled linearly (equally), binocular disparity between the left image and the right image is reduced towards the right side 2022 from the left side 2021. As a result, 3-dimensional image effect is generated, and the 2D image 2010 is displayed on the screen to be tilted.

In more detail, a stereoscopic image having a great depth value is displayed in a zone close to the left side 2021, and a stereoscopic image having a small depth value is displayed in a zone far away from the left side 2021. Accordingly, the electronic device according to the present invention can provide stereoscopic effect of 3D image to the 2D image 2010 and output the 2D image 2010 with tilt to minimize an overlap zone with other image displayed on the screen.

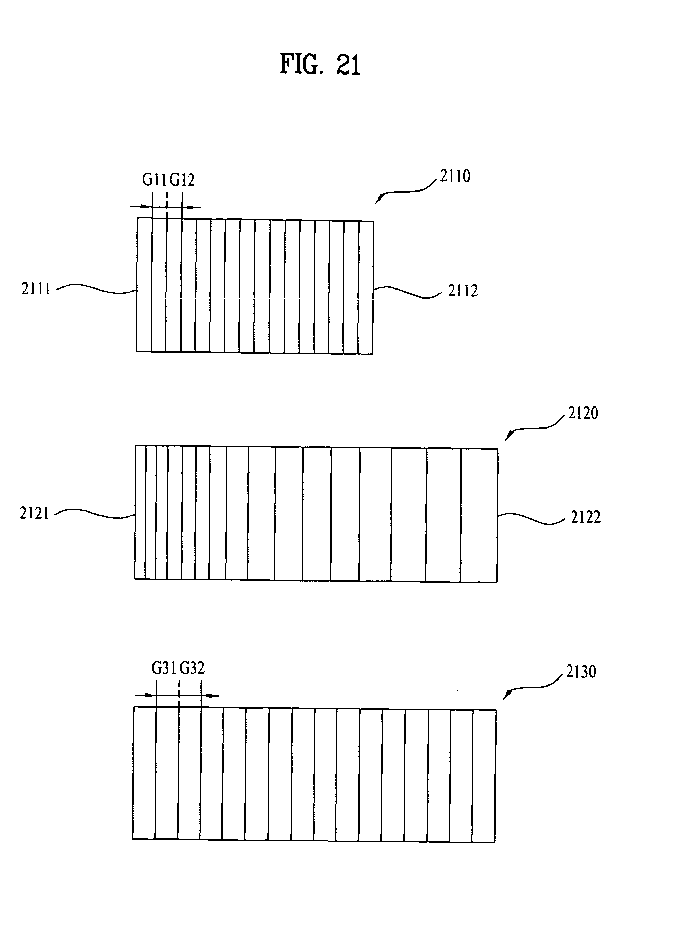

FIG. 21 is a diagram illustrating a second embodiment of a method for scaling image data.

Referring to FIG. 21, the electronic device 100 generates left image 2120 by non-linearly scaling a split interval of each of a plurality of split images, so that a width of the split interval is increased towards the right side 2112 of the 2D image 2110 from the left side 2111 of the 2D image 2110. In other words, the split intervals G11 or G12 of the respective split images are scaled differently from each other.

In order to generate the right image 2130 that forms one stereoscopic image together with the left image 2120, the electronic device 100 does not scale the split intervals differently from each other. In other words, the right image 2130 is generated by linear scaling of the split images, wherein the intervals G31 or G32 of the split images are maintained equally.

The split interval of each of a plurality of split images is controlled non-linearly, so that the width of the split interval is increased towards the right side 2122 of the left image 2120 from the left side 2121 of the left image 2120. If the split interval of the right image 2130 is controlled linearly (equally), binocular disparity between the left image and the right image is increased towards the right side 2122 from the left side 2121. As a result, 3-dimensional image effect is generated, and the 2D image 2110 is displayed on the screen to be tilted.

In more detail, a stereoscopic image having a small depth value is displayed in a zone close to the left side 2121, and a stereoscopic image having a great depth value is displayed in a zone far away from the left side 2121. Accordingly, the electronic device according to the present invention can provide stereoscopic effect of 3D image to the 2D image 2110 and output the 2D image 2110 with tilt to minimize an overlap zone with other image displayed on the screen.

As described above, according to the present invention, the user can control broadcast information while viewing broadcasting. In addition, the GUI for broadcast information based on the request of the user is configured in three-dimension to increase recognition of the corresponding GUI and seek convenience in use.

The present invention can be implemented in a recording medium, which can be read by a computer, as a code that can be read by the computer. The recording medium that can be read by the computer includes all kinds of recording media in which data that can be read by the computer are stored. Examples of the recording medium include ROM, RAM, CD-ROM, magnetic tape, floppy disk, and optical data memory. Also, another example of the recording medium may be implemented in a type of carrier wave such as transmission through Internet. Also, the recording medium that can be read by the computer may be distributed in a computer system connected thereto through the network, whereby codes that can be read by the computer can be stored and implemented in a distributive mode.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

## Claims

1. A method for providing a Graphical User Interface, comprising:
outputting a first signal for displaying an image data of a first broadcast content to a display;
detecting a first request for providing broadcast information;
forming a first set of pixel data for displaying a Graphical User interface (GUI) providing the broadcast information in response to detecting the first request;
forming a second set of pixel data and a third set of pixel data using the first set of pixel data, wherein one of the second set of pixel data and the third set of pixel data is linearly scaled and the other is nonlinearly scaled;
mixing the image data with the second set of pixel data and the third set of pixel data; and
outputting a second signal for displaying the mixed image data to the display.

2. The method of the claim 1, further comprising:
detecting a second request for displaying a second broadcast content on the GUI;
receiving the second broadcast content in response to detecting the second request;
forming a fourth set of pixel data and a fifth set of pixel data using an image data of the received second broadcast content, wherein one of the fourth set of pixel data and the fifth set of pixel data is linearly scaled and the other is nonlinearly scaled;
mixing the mixed image data with the fourth set of pixel data and the fifth set of pixel data; and
outputting a third signal for displaying the mixed image data to the display.

3. The method of the claim 2, further comprising:
detecting a third request for providing information about the second broadcast content;
forming a sixth set of pixel data for displaying a GUI providing the information in response to detecting the third request;
forming a seventh set of pixel data and a eighth set of pixel data using the sixth set of pixel data, wherein one of the seventh set of pixel data and the eighth set of pixel data is linearly scaled and the other is nonlinearly scaled;
mixing the mixed image data with the seventh set of pixel data and the eighth set of pixel data; and
outputting a forth signal for displaying the mixed image data to the display.

4. The method of the claim 2, further comprising:
detecting a third request for changing from the first broadcast content to the second broadcast content;
mixing the image data of the second broadcast content with the first set of pixel data and the second set of pixel data in response to detecting the third request; and
outputting a forth signal for displaying the mixed image data to the display.

5. The method of the claim 1, further comprising:
detecting a second request for changing from the first broadcast content to a second broadcast content on the GUI;
receiving the second broadcast content in response to detecting the second request;
mixing an image data of the received second broadcast content with the first set of pixel data and the second set of pixel data; and
outputting a third signal for displaying the mixed image data to the display.

6. The method of the claim 1, further comprising:
detecting a second request for changing from the first broadcast content to a second broadcast content on the GUI;
identifying whether the second broadcast content is locked in response to detecting the second request;
forming a fourth set of pixel data for displaying a GUI for authentication information when the second broadcast content is locked;
forming a fifth set of pixel data and a sixth set of pixel data using the fourth set of pixel data, wherein one of the fifth set of pixel data and the sixth set of pixel data is linearly scaled and the other is nonlinearly scaled; and
outputting a third signal for displaying the fifth set of pixel data and the sixth set of pixel data to the display.

7. The method of the claim 1, wherein the mixing the image data comprising:
mixing a left-view image data of the image data with the second set of pixel data and a right-view image data of the image data with the third set of pixel data.

8. The method of the claim 1, wherein the image data of the first broadcast content is one of 2 dimensional image and 3 dimensional image.

9. An electronic device comprising:
a formatter configured to output a first signal for displaying an image data of a first broadcast content to a display;
a controller contigured to detect a first request for providing broadcast information, form a first set of pixel data for displaying a Graphical User interface (GUI) providing the broadcast information in response to detecting the first request, and form a second set of pixel data and a third set of pixel data using the first set of pixel data, wherein one of the second set of pixel data and the third set of pixel data is linearly scaled and the other is nonlinearly scaled; and
a mixer configured to mix the image data with the second set of pixel data and the third set of pixel data,
wherein the formatter outputs a second signal for displaying the mixed image data to the display.

10. The electronic device of the claim 9, wherein the controller detects a second request for displaying a second broadcast content on the GUI, receives the second broadcast content in response to detecting the second request, and forms a fourth set of pixel data and a fifth set of pixel data using an image data of the received second broadcast content, wherein one of the fourth set of pixel data and the fifth set of pixel data is linearly scaled and the other is nonlinearly scaled,
the mixer mixes the mixed image data with the fourth set of pixel data and the fifth set of pixel data, and
the formatter outputs a third signal for displaying the mixed image data to the display.

11. The electronic device of the claim 10, wherein the controller detects a third request for providing information about the second broadcast content, forms a sixth set of pixel data for displaying a GUI providing the information in response to detecting the third request, and forms a seventh set of pixel data and a eighth set of pixel data using the sixth set of pixel data, wherein one of the seventh set of pixel data and the eighth set of pixel data is linearly scaled and the other is nonlinearly scaled,
the mixer mixes the mixed image data with the seventh set of pixel data and the eighth set of pixel data, and
the formatter outputs a forth signal for displaying the mixed image data to the display.

12. The electronic device of the claim 10, wherein the controller detects a third request for changing from the first broadcast content to the second broadcast content,
the mixer mixed the image data of the second broadcast content with the first set of pixel data and the second set of pixel data in response to detecting the third request, and
the formatter outputs a forth signal for displaying the mixed image data to the display.

13. The electronic device of the claim 9, wherein the controller detects a second request for changing from the first broadcast content to a second broadcast content on the GUI, and controls to receive the second broadcast content in response to detecting the second request, the mixer mixes an image data of the received second broadcast content with the first set of pixel data and the second set of pixel data, and
the formatter outputs a third signal for displaying the mixed image data to the display.

14. The electronic device of the claim 9, wherein the controller detects a second request for changing from the first broadcast content to a second broadcast content on the GUI, identifies whether the second broadcast content is locked in response to detecting the second request, forms a fourth set of pixel data for displaying a GUI for authentication information when the second broadcast content is locked, and forms a fifth set of pixel data and a sixth set of pixel data using the fourth set of pixel data, wherein one of the fifth set of pixel data and the sixth set of pixel data is linearly scaled and the other is nonlinearly scaled, and
the formatter outputs a third signal for displaying the fifth set of pixel data and the sixth set of pixel data to the display.

15. The electronic device of the claim 9, wherein the mixer mixes a left-view image data of the image data with the second set of pixel data and a right-view image data of the image data with the third set of pixel data.
